# EUROPEAN PATENT APPLICATION

(11) **EP 2 656 813 A1**
(43) Date of publication of application: **30.10.2013**
(21) Application number: 12165754.8
(22) Date of filing: 26.04.2012
(51) Int. Cl.: A61C 8/00

(54) **Restorable zirconium dioxide-based one piece dental implant**

(71) Applicant: Chen, Chun-Leon, New Taipei City 24764 (TW)
(72) Inventor: Chen, Chun-Leon, New Taipei City 24764 (TW)
(74) Representative: K & H Bonapat

(57) **Abstract**

A restorable zirconium dioxide-based one piece implant (10) includes an implant root (11) made of zirconium dioxide and having a bottom coarse thread portion (111) for mounting in the gum of a patient and a top fine thread portion (112) at the top side of the bottom coarse thread portion (111), an abutment (12) formed integral with the top end of the top fine thread portion (112) of the implant root (11) for the mounting of a crown (30), and a vertical center hole (13) extending vertically downwardly from the topmost edge of the abutment (12) into the implant root toward the bottom end of the bottom coarse thread portion (111) of the implant root (11) and having a length greater than 2/3 of the combined length of the implant root (11) and the abutment (12), such that when the abutment (12) breaks accidentally or after a long use, the vertical center hole (13) provides a space for the application of post and core technology to embed a post in the broken abutment (12) in restoring the abutment (12).

## Description

### BACKGROUND OF THE INVENTION

### 1. Field of the Invention:

The present invention relates to dental implant technology and more particularly, to a restorable zirconium dioxide-based one piece dental implant.

### 2. Description of the Related Art:

Conventionally, dental implant surgery is to embed an implant into the patient's gum, and then to fasten an abutment to the top side of the implant with a screw, and then to install a crown to the abutment after the wound is healed.

Nowadays, one piece dental implant design is available. A one piece dental implant has the implant and the abutment made in one piece, facilitating dental implant surgery.

Conventional dental implants are commonly prepared by using a titanium-based material. A titanium-based material exhibits an iron-gray color and has a hard texture A titanium-based implant can provide a screw hole for the mounting of a screw to affix an abutment to the top side of the implant. Related dental implant designs are seen in US7,396,231 entitled "Flared implant extender for endosseous dental implants" and US Application Publication 2008-0261175, entitled "Dental implant".

A new technology is known using zirconium dioxide to prepare a dental implant mating the white color of natural teeth. Since a zirconium dioxide dental implant causes a sense of beauty, it is beginning to be used. However, due to fragile characteristic, a zirconium dioxide-based material cannot be secondarily processed to provide a screw hole for the mounting of a screw to affix an abutment. Thus, a zirconium dioxide-based dental implant can only be made in one piece.

When a zirconium dioxide-based dental implant breaks accidentally or after a long use, the separated crown cannot be used again. When this condition occurs, the residual implant root must be removed from the patient's gum for installation of a new implant. This situation brings great harm and pain to the patient. An improvement in this regard is necessary.

Further, post and core technology has been intensively used in dental surgery. If the tooth structure is insufficient for the installation of a crown due to structural damage, spoil or breaking, post and core technology can be employed to restore the tooth structure for the installation of a crown. However, post and core technology has not yet been used in implant root structure.

### SUMMARY OF THE INVENTION

The present invention has been accomplished under the circumstances in view. It is one object of the present invention to provide a restorable zirconium dioxide-based one piece dental implant that is restorable and that reduces patient pain during a dental implant surgery.

To achieve this and other objects of the present invention, a restorable one piece dental implant comprises an implant root, which is made of zirconium dioxide and which comprises a coarse thread portion disposed at the bottom side thereof for installation in the gum of a patient, and a top fine thread portion disposed at the top side of the coarse thread portion, an abutment, which is made of zirconium dioxide and formed integral with one end of the fine thread portion of the implant root remote from the coarse thread portion for the mounting of a crown, and a vertical center hole extending vertically downwardly from the topmost edge of the abutment through the length of the abutment into the implant root to a predetermined depth above the lowest edge of the implant root. The vertical center hole has a length greater than 2/3 of the combined length of the implant root and the abutment. When the abutment breaks accidentally or after a long use, the vertical center hole provides a space for the application of post and core technology to embed a post in the broken abutment in restoring the abutment.

### BRIEF DESCRIPTION OF THE DRAWINGS

FIG. 1 is an elevational view of a restorable zirconium dioxide-based one piece dental implant in accordance with the present invention.
FIG. 2 is a plain view of the restorable zirconium dioxide-based one piece dental implant in accordance with the present invention.
FIG. 2A is a sectional view taken along line A-A of FIG. 2.
FIG. 3 is a schematic drawing of the present invention, illustrating the restorable zirconium dioxide-based one piece dental implant installed in the gum of a patient.
FIG. 4 is a schematic drawing of the present invention, illustrating the restorable zirconium dioxide-based one piece dental implant installed in the gum of a patient and a crown affixed to the abutment of the restorable zirconium dioxide-based one piece dental implant.
FIG. 5 is a schematic drawing of the present invention, illustrating the abutment of the restorable zirconium dioxide-based one piece dental implant broken.
FIG. 6 is a schematic drawing of the present invention, illustrating the broken restorable zirconium dioxide-based one piece dental implant restored subject to post and core technology.
FIG. 7 corresponds to FIG. 6, illustrating a crown affixed to the abutment of the restored zirconium dioxide-based one piece dental implant.

### DETAILED DESCRIPTION OF THE PREFERRED EMBODIMENT

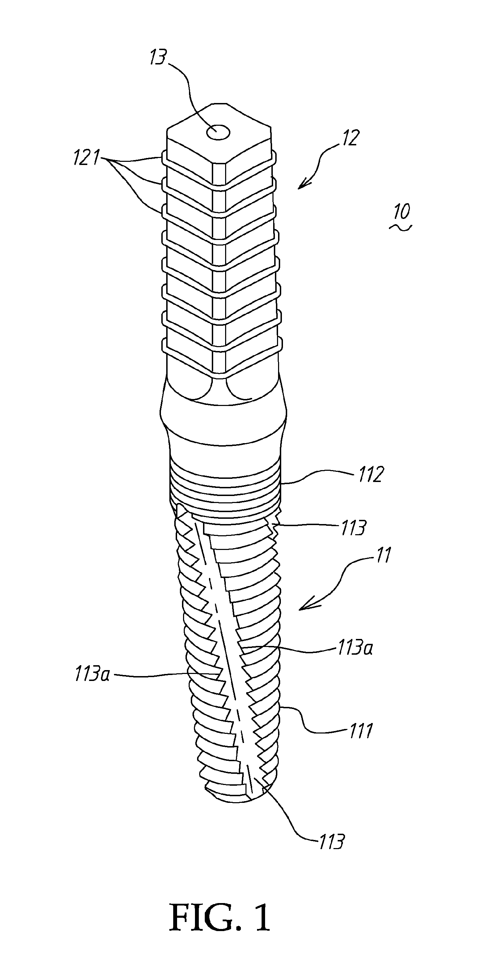

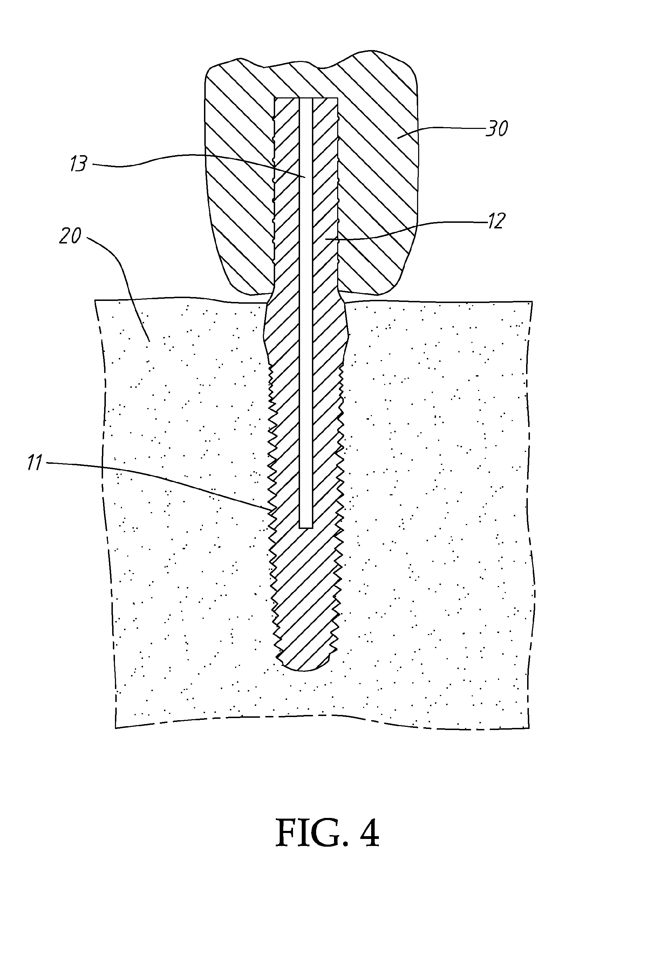

Referring to FIGS. 1-3, a restorable zirconium dioxide-based one piece implant **10** in accordance with the present invention is shown. The restorable zirconium dioxide-based one piece implant **10** is prepared by using zirconium dioxide, comprising an implant root **11.** The implant root **11** comprises a coarse thread portion **111** at the bottom side that can be driven into the gum of a patient, a fine thread portion **112** at the top side of the coarse thread portion **111,** a plurality of spiral grooves **113** spirally cut through the periphery thereof, and a cutting edge **113*a*** longitudinally extending along each of the two opposite lateral sides of each of the spiral grooves **113.** The restorable zirconium dioxide-based one piece implant **10** further comprises an abutment **12** formed integral with the top end of the fine thread portion **112** of the implant root **11** for supporting a crown **30,** as shown in FIG. 4. The abutment **12** is also prepared by using zirconium dioxide, comprising a plurality of ribs **121** protruded from the periphery thereof and disposed at different elevations.

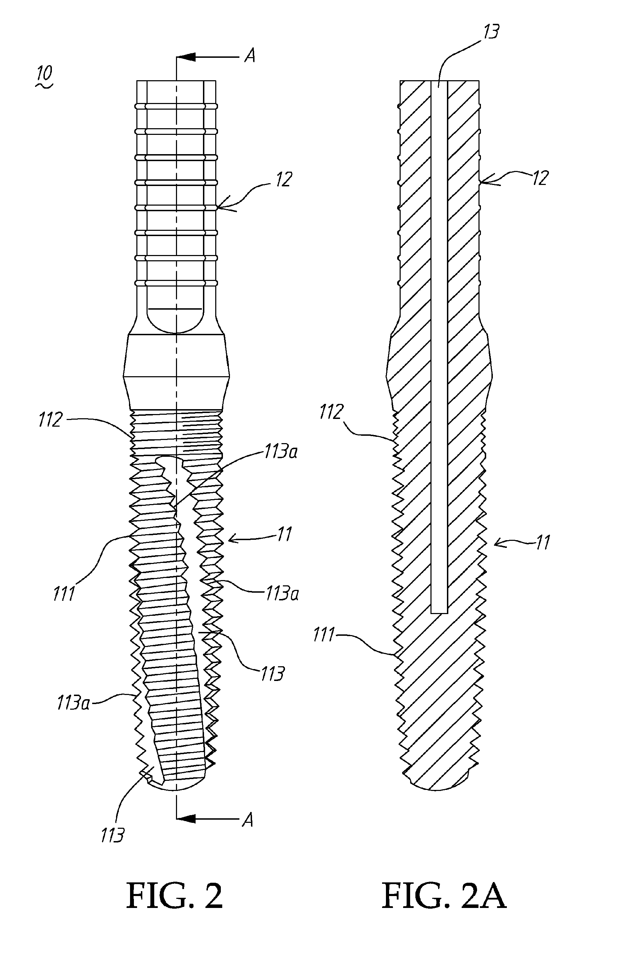

Referring to FIG. 2A, the restorable zirconium dioxide-based one piece implant **10** further comprises a vertical center hole **13** vertically downwardly extending from the topmost edge of the abutment **12** into the implant root **11** to a predetermined depth close to the bottom end of the implant root **11.** Preferably, the vertical center hole **13** has a length greater than 2/3 of the combined length of the implant root **11** and the abutment **12.**

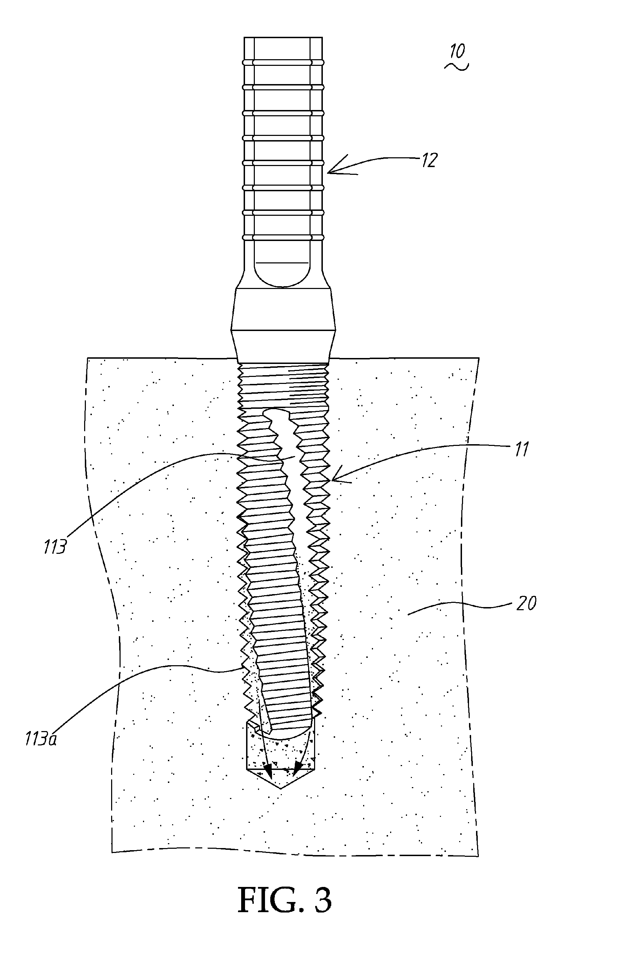

When in use, as shown in FIG. 3, a high-speed hand tool is used to drive the implant root **11** into the patient's gum **20.** At this time, the cutting edges **113*a*** of the spiral grooves **113** of the implant root **11** cut the bone structure in the gum **20,** enabling the separated bone tissues to be propelled toward the inside of the gum **20,** as indicated by the arrowhead signs. When matching with sinus lift, the separated bone tissues can be pushed into the sinus cavity. By means of the design of the spiral grooves **113,** bone powder can be conveniently filled into the inside of the gum **20** around the implant root **11** during implant surgery, thereby forming a stabilized structure.

After the wound is healed, a crown **30** can then be affixed to the abutment **12,** as shown in FIG. 4, finishing the dental implant surgery.

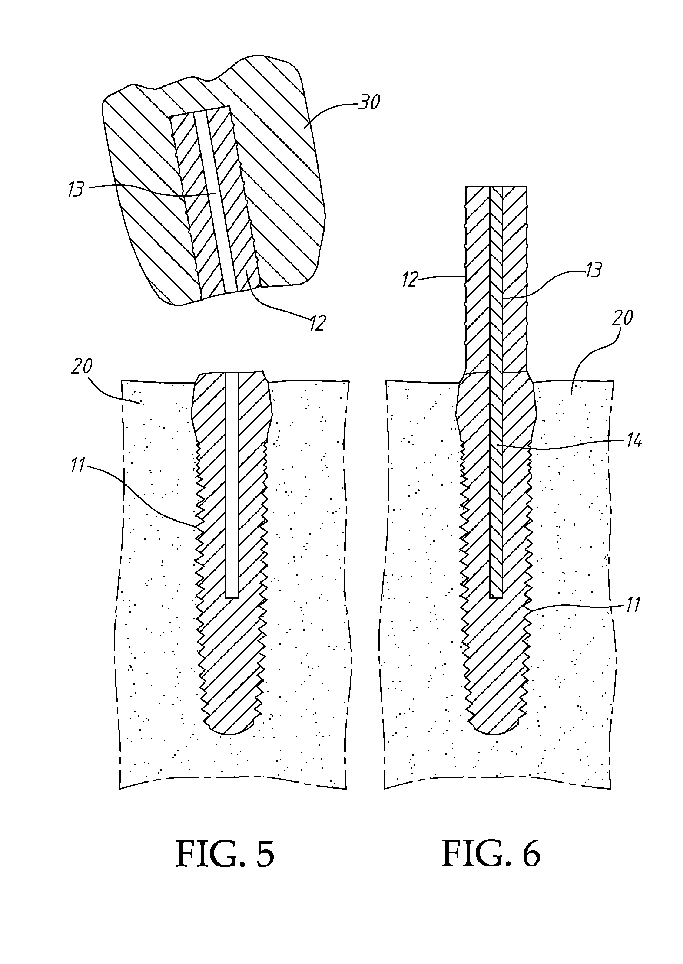

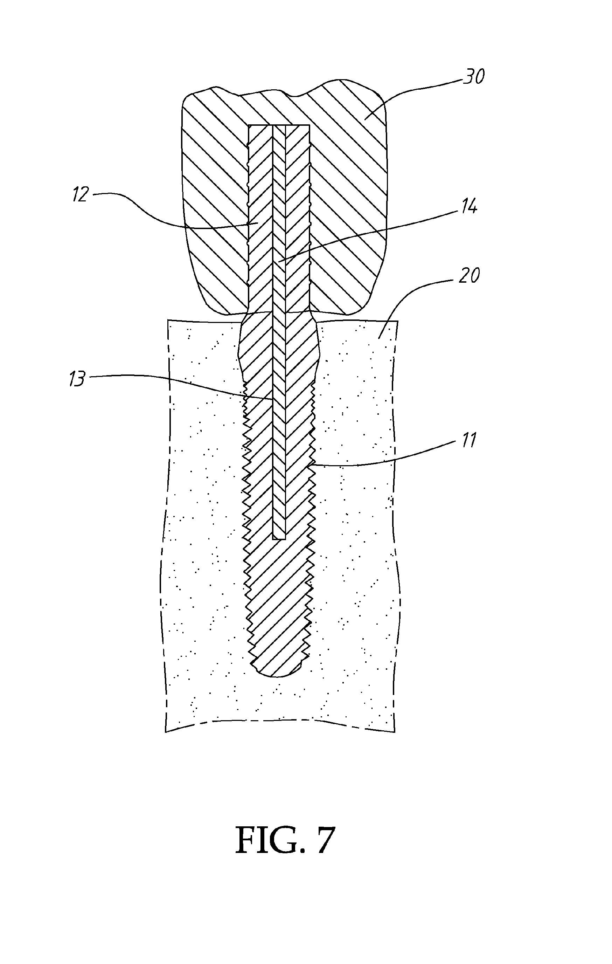

Referring to FIG. 5, after a long use or an improper use of the crown **30,** the abutment **11** may break, causing disconnection of the crown **30** from the gum **20.** At this time, as shown in FIG. 6, post and core technology can be employed to embed a post **14** in the vertical center hole **13,** thereby restoring the abutment **12.** Thus, the crown **30** can be affixed to the abutment **12** again, as shown in FIG. 7.

By means of the vertical center hole **13** in the one piece implant **10** and the use of post and core technology, the broken abutment **12** can be restored. Thus, the restorable zirconium dioxide-based one piece implant of the invention shows a better effect when compared to conventional one piece implants. When the restorable zirconium dioxide-based one piece implant is broken, it can be restored without reinstallation of a new implant, reducing patient pain.

Although a particular embodiment of the invention has been described in detail for purposes of illustration, various modifications and enhancements may be made without departing from the spirit and scope of the invention. Accordingly, the invention is not to be limited except as by the appended claims.

## Claims

1. A restorable zirconium dioxide-based one piece implant, comprising:
an implant root made of zirconium dioxide, said implant root comprising a coarse thread portion disposed at a bottom side thereof for installation in the gum of a patient, a top fine thread portion disposed at a top side of said coarse thread portion;
an abutment made of zirconium dioxide and formed integral with one end of said fine thread portion of said implant root remote from said coarse thread portion for the mounting of a crown; and
a vertical center hole extending vertically downwardly from the topmost edge of said abutment through the length of said abutment into said implant root to a predetermined depth above the lowest edge of said implant root such that when said abutment breaks accidentally or after a long use, said vertical center hole provides a space for the application of post and core technology to embed a post in the broken abutment in restoring the abutment, said vertical center hole having a length greater than 2/3 of the combined length of said implant root and said abutment.

2. The restorable zirconium dioxide-based one piece implant as claimed in claim 1, wherein said implant root comprises a plurality of spiral grooves extending around the periphery thereof, and a cutting edge extending longitudinally along each of two opposite lateral sides of each of said spiral grooves for cutting the bone structure in the gum of the patient for enabling the separated bone tissues to be propelled toward the inside of the gum of the patient when said implant root is being driven into the gum of the patient.
